Europäisches Patentamt

European Patent Office

Office européen des brevets

(19)

(11) EP 0 868 097 A2

(12) EUROPÄISCHE PATENTANMELDUNG

(43) Veröffentlichungstag:
30.09.1998  Patentblatt 1998/40

(51) Int. Cl.$^6$: H04Q 3/66

(21) Anmeldenummer: 98104708.7

(22) Anmeldetag: 16.03.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 27.03.1997 DE 19713168
13.10.1997 DE 19745251

(71) Anmelder:
SIEMENS AKTIENGESELLSCHAFT
80333 München (DE)

(72) Erfinder: Hummel, Heinrich
85232 Günding (DE)

(54) Verfahren zum Bestimmen eines Netzübergangsknotens

(57) Es wird ein Netzübergangsknoten für eine Verbindung ermittelt, die innerhalb eines Kommunikationsnetzverbundes von einem ersten Kommunikationsnetz über einen Zielnetzknoten zu einem Zielendgerät in einem Zielkommunikationsnetz übergeht. Dazu wird die E164-Adresse des Zielendgerätes ausgewertet, um die Adressen des Zielnetzknotens und der diesem hierarchisch übergeordneten Netzknoten zu ermitteln. Weiterhin wird der Ort des Zielendgerätes näherungsweise ermittelt, indem der Ort eines dem Zielendgerät nahegelegenen Knotens durch Vergleichen der ermittelten Adressen mit gespeicherten Adressen, denen geografische Koordinaten zugeordnet sind, bestimmt wird. Schließlich wird ein Netzknoten des ersten Kommunikationssystems ermittelt, der dem Netzknoten des Zielkommunikationssystems als Netzübergang zugeordnet ist, dessen geografische Koordinaten ermittelt werden konnten und der dem Zielendgerät am nächsten gelegen ist.

EP 0 868 097 A2

**Beschreibung**

Die Erfindung betrifft ein Verfahren zum Bestimmen eines Netzübergangsknotens für eine über einen Zielnetzknoten zu einem Zielendgerät in einem Zielkommunikationsnetz aufzubauenden Verbindung innerhalb eines Kommunikationsnetzverbundes, wobei die Verbindung von einem ersten Kommunikationsnetz mindestens in ein zweites Kommunikationsnetz übergeht.

Sich zumindest teilweise überlappende Kommunikationsnetze, die gemeinsam einen Kommunikationsnetzverbund bilden, wobei Verbindungen mit Netzübergang von einem Kommunikationsnetz zum anderen Kommunikationsnetz geführt werden, sind u.a. in Form von Mobilfunknetzen und mit diesen überlappenden stationären Netzen oder in Form von Privatnetzen bzw. Firmennetzen und Mobilfunknetzen oder stationären Netzen bekannt. Hierbei werden in zunehmendem Maße Privatnetze auch für jedermann zugänglich, beispielsweise Privatnetze von Diensteanbietern, die ein privates Kommunikationsnetz für Langstreckenzwecke zur Verfügung stellen und den Peripheriebereich von öffentlichen Kommunikationsnetzen nutzen. Die vorliegende Erfindung betrifft nun den Fall, daß ein Verbindungsaufbau von einem in einem ersten Kommunikationsnetz angeschlossenen Endgerät zu einem in einem zweiten Kommunikationsnetz angeschlossenen Endgerät vorgenommen werden soll. Außerdem betrifft die Erfindung den Fall, daß eine Verbindung aus irgendeinem Kommunikationsnetz in ein erstes Kommunikationsnetz aufgebaut wird, innerhalb dieses ersten Kommunikationsnetzes ein Leitweg gesucht wird zu einer Netzübergangsstelle in ein zweites Kommunikationsnetz, um dann innerhalb des zweiten Kommunikationsnetzes einen Leitweg über einen Zielvermittlungsknoten zu einem Adressaten zu führen.

Es ist möglich, bei einem aufzubauenden Ruf von einem Privatnetz zu einem öffentlichen Netz bei dem Ermitteln des Leitwegs innerhalb des Privatnetzes möglichst nahe an den Zielnetzknoten des öffentlichen Netzes heranzugehen und somit eine Netzübergangsstelle anhand einer vorliegenden Netzknotentopologie des Privatnetzes mit Hilfe der E.164-Adresse des Zielnetzknotens eine Netzübergangsstelle zu ermitteln. Eine solche Vorgehensweise ist jedoch nicht nach Kostengesichtspunkten optimiert. Dies kann dazu führen, daß der Leitweg auf einer relativ großen Strecke innerhalb des Privatnetzes verläuft und trotzdem an den Netzbetreiber des öffentlichen Netzes die Gebühr für eine Fernverbindung berechnet werden muß.

Aufgabe der vorliegenden Erfindung ist es, ein kostengünstiges Verfahren zum Ermitteln des Leitwegs und zum Ermitteln des Netzübergangs anzugeben.

Die Erfindung löst diese Aufgabe durch ein Verfahren mit den Merkmalen des Anspruches 1.

Ein erfindungsgemäßes Verfahren zum Bestimmen eines Netzübergangsknotens für eine über einen Zielnetzknoten zu einem Zielendgerät in einem Zielkommunikationsnetz aufzubauenden Verbindung innerhalb eines Kommunikationsnetzverbundes, wobei die Verbindung von einem ersten Kommunikationsnetz mindestens in ein zweites Kommunikationsnetz übergeht, hat folgende Verfahrensschritte:

Auswerten der E164-Adresse des Zielendgerätes zum Ermitteln der Adresse des Zielnetzknotens und der Adressen von diesem Zielnetzknoten hierarchisch übergeordneten Netzknoten innerhalb des Zielkommunikationsnetzes;

annäherndes Ermitteln des Ortes des Zielendgerätes durch Ermitteln des Ortes eines dem Zielendgerät nahegelegenen Knotens durch vergleichen der ermittelten Adressen mit gespeicherten Adressen, denen geografische Koordinaten zugeordnet sind; und

Ermitteln eines Netzknotens des ersten Kommunikationsnetzes, der dem Netzknoten des Zielkommunikationsnetzes als Netzübergang zugeordnet ist, dessen geografische Koordinaten ermittelt werden konnten und der dem Zielendgerät am nächsten gelegen ist.

Eine Weiterbildung eines erfindungsgemäßen Verfahrens zeichnet sich dadurch aus, daß zum Ermitteln des dem Netzknoten des Zielkommunikationsnetzes zugeordneten Netzknotens des ersten Kommunikationsnetzes zuerst in einer Tabelle verglichen wird, ob der Ort des Zielendgerätes innerhalb eines Bereiches liegt, dem ein spezieller Netzknoten des ersten Kommunikationsnetzes als Netzübergang zugeordnet ist, und, falls nicht, daß der Abstand zwischen dem dem Ort des Zielendgeräts als am nächsten gelegen ermittelten Ortes und Netzknoten des ersten Kommunikationsnetzes jeweils ermittelt wird, und der Netzknoten des ersten Kommunikationsnetzes mit dem geringsten Abstand zum Ort des Zielendgerätes als Netzübergang ausgewählt wird.

Der Ort eines Zielendgerätes liegt hierbei in einer solchen Ausgestaltungsform eines erfindungsgemäßen Verfahrens, beispielsweise in einer Zone, die über eine bestimmte Netzübergangsverbindung, beispielsweise eine Satellitenverbindung, erreichbar ist. In einem solchen Fall, beispielsweise bei einer Verbindung vom amerikanischen Kontinent nach Europa, ist der Netzübergangsknoten fest vorgegeben.

Eine günstige Weiterbildung der beschriebenen Ausgestaltungsform eines erfindungsgemäßen Verfahrens sieht vor, daß zum Ermitteln des Abstandes des Ortes des Zielendgerätes zu Netzknoten des ersten Kommunikationsnetzes jeweils die geografischen Koordinaten der Netzknoten des ersten Kommunikationsnetzes aus einer Tabelle entnommen werden und die Abstände jeweils auf der Grundlage der geografischen Koordinaten der einzelnen Netzknoten des ersten Kommunikationsnetzes und der dem Zielendgerät als am nächsten gelegen ermittelten geografischen Koordinaten berechnet wird.

Eine andere Weiterbildung eines erfindungsgemäßen Verfahrens baut darauf auf, daß die geografische Breite und die geografische Länge des dem Ort des Zielendgeräts als am nächsten gelegen ermittelten Ortes jeweils mit der geografischen Breite bzw. der geografischen Länge jedes Netzknotens des ersten Kommunikationsnetzes verglichen werden und daß der Abstand zwischen dem ermittelten Ort des Zielendgerätes und einer Gruppe von Netzknoten des ersten Kommunikationsnetzes berechnet wird, deren Abstand bezüglich der geografischen Länge oder bezüglich der geografischen Breite als relativ gering festgestellt worden ist, um dadurch den Netzknoten des ersten Kommunikationsnetzes mit dem kürzesten Abstand zum Zielendgerät zu ermitteln und als Netzübergang festzulegen.

Das vorherige Abschätzen der Abstände der Längenangaben und der Abstände der Breitenangaben verringert die Anzahl der nach einem aufwendigen Algorithmus zu berechnenden tatsächlichen Netzknotenabstände.

Wenn das Zielkommunikationsnetz zumindest teilweise mit dem ersten Kommunikationsnetz überlappt und ein Netzübergang vom ersten Kommunikationsnetz zum Zielkommunikationsnetz zu ermitteln ist, sieht eine besonders günstige Ausgestaltungsform der Erfindung vor, daß im ersten Kommunikationsnetz eine Tabelle der Netzknoten des Zielkommunikationsnetzes und deren geografische Koordinaten vorliegt, und daß der Abstand zwischen dem Zielnetzknoten und allen Netzknoten des ersten Kommunikationsnetzes auf der Grundlage der geografischen Koordinaten jeweils berechnet wird, wobei der Netzknoten des ersten Kommunikationsnetzes als Netzübergang ausgewählt wird, der innerhalb des Zielkommunikationsnetzes in der günstigsten Gebührenentfernungszone liegt und der von den in der günstigsten Gebührenentfernungszone liegenden Netzknoten den kürzesten Abstand innerhalb des ersten Kommunikationsnetzes zu einem Ursprungsknoten hat, von dem aus die Verbindung aufgebaut wird.

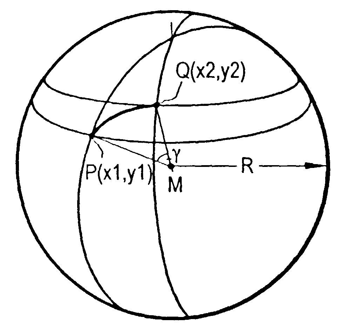

Nachfolgend wird die Erfindung unter Bezugnahme auf die Figur näher erläutert.

Hierzu wird dargelegt, wie auf der Grundlage der geografischen Koordinaten (geografische Längen- und Breitenangaben) der geodätische Abstand zweier Orte auf der Erde ermittelt werden kann.

Es seien P und Q irgendwelche Netzknotenpunkte und x1,y1 bzw. x2,y2 deren geografische Längen/Breiten-Angaben.

Die Figur zeigt in schematischer Darstellung eine Erdkugel mit dem Mittelpunkt M, dem Erdradius R, einen Anfangspunkt P und einen Endpunkt Q auf der Oberfläche, die die Längen- und Breitenangaben x1,y1 bzw. x2,y2 haben. Die den Koordinaten x1 und x2 zugeordneten Längenkreise sowie die den Koordinaten y1 und y2 zugeordneten Breitenkreise sind ebenfalls dargestellt.

Die Länge D(P,Q) des kürzesten auf der Oberfläche verlaufenden Weges (also der Geodäten) zwischen den Punkten P und Q, läßt sich dann beispielsweise mittels eines mit Standardmethoden der analytischen Geometrie zu gewinnenden Ausdrucks für den Winkel

$$\gamma = \angle\ PMQ =$$
$$= \arccos[\ \cos y2 * \cos y1 * \cos(x2-x1) + \sin y2 * \sin y1\ ]$$

exakt bestimmen zu

$D(P,Q) = R * |\gamma|$, falls $\gamma$ im Bogenmaß eingesetzt wird.

Die Längenangaben x1, x2 sind dabei entweder beide in westlicher- oder beide in östlicher Länge anzugeben. Analog sind die Breitenangaben y1, y2 entweder beide in nördlicher- oder beide in südlicher Breite einzusetzen. Die Umrechnung zwischen südlicher und nördlicher Breite bzw. östlicher und westlicher Länge kann durch Vorzeichenwechsel erfolgen.

Zur Verringerung des zur Auswertung der obigen Ausdrücke notwendigen Berechnungsaufwands können mit trigonometrischen Standardmethoden alternative exakte Darstellungsformen für D(P,Q) bzw. $\gamma$ gefunden werden, wie z.B. der Ausdruck

$$\gamma = \arccos[\ \cos(y2-y1)*(1-\sin^2((x1-x2)/2)) - - \cos(y2+y1)* \sin^2((x1-x2)/2)\ ],$$

der mit einer geringeren Anzahl rechenaufwendiger trigonometrischer Funktionsauswertungen als der zuerst angegebene auskommt.

Mittels näherungsweiser Berechnungsmethoden für die obigen Ausdrücke läßt sich der Berechnungsaufwand für D(P,Q) noch weiter verringern.

Nachfolgend wird ein Ausführungsbeispiel zum Bestimmung des günstigsten Ausstiegsknotens in einem Privatnetz angegeben, wenn ein öffentliches Ziel mit öffentlicher E.164-Rufnummer erreicht werden soll.

Bezüglich aller Netzknoten $P_i$ eines Privatkommunikationsnetzes mögen die geografischen Koordinaten bekannt sein, sprich $P_i (x_i,y_i)$ wobei $x_i$ die geografische Länge und $y_i$ die geografische Breite bezeichnen möge. Das Privatnetz kann dabei in der Tat beliebig über den Globus ausgebreitet sein. Betrachtet werden nur jene Netzknoten $P_i$ die auch einen Netzübergang in das öffentliche Netz besitzen.

## L1: Koordiaten-Liste aller Privatnetzknoten

| | |
|---|---|
| 1: | geographische Koordinaten $(x_1,y_1)$ des Privatknoten $P_1$ |
| 2: | geographische Koordinaten $(x_2,y_2)$ des Privatknoten $P_2$ |
| | |
| n: | geographische Koordinaten $(x_n,y_n)$ des Privatknoten $P_n$ |

Erfindungsgemäß wird vom Zielpunkt Z des Verbindungswunsches in bestmöglicher Annäherung dessen geografische Lage ermittelt, d.h. $Z(x_z,y_z)$. Im Anschluß daran werden alle Distanzen $D (P_i, Z)$ mit Hilfe obiger mathematischer Formeln berechnet. Der dem Zielpunkt am nächstgelegene Netzknoten $P_{i^*}$ ist jener Knoten, dessen Distanz $D (P_{i^*}, Z)$ am kleinsten ist. Erfindungsgemäß wird erst zum Knoten $P_{i^*}$ geroutet ehe in das öffentliche Netz gewechselt wird, allerdings nur dann, wenn sich dadurch eine Kostenreduzierung seitens des öffentlichen Service Providers erzielen läßt.

Erfindungsgemäß wird dieses Verfahren dahingehend verfeinert, daß mitunter der zweitnäheste Netzknoten (der drittnäheste, usw.) die Rolle von $P_{i^*}$ übernimmt, wenn etwa im Knoten $P_{i^*}$ die Ausstiegsleitungen voll belegt sind oder keine Route hin zu $P_{i^*}$ verfügbar ist.

Ermitteln der geografischen Koordinaten $(x_z,y_z)$ vom Zielpunkt Z:

## Suchspeicher um die Koordinaten eines Zielpunktes zu ermitteln

**L2:**                         **L3:**

| E.164 Länder-KZ | Zeiger |
|---|---|
| 1 (Nordamerika ohne Mexiko) | |
| 20 (Ägypten) | |
| | |
| 49 (Deutschland) | |
| | |
| 971 Arab.Emirate | |

| | |
|---|---|
| 0 | geogr.Länge/Breite bzgl. der Mitte von USA (Mainland) |
| ddd Area-code 1 | geogr. Länge/Breite |
| | |
| ddd Area-code last | geogr. Länge/Breite |

| | |
|---|---|
| 0 | geogr.Länge/Breite f.Mitte Ägypten |
| | |
| ddd Area-code last | geogr. Länge/Breite |

| | |
|---|---|
| 0 | geogr. Mitte Deutschlands |
| 1. OVON | samt geogr. Koordinaten |
| 5222. OVON | samt geogr. Koordinaten |

| | |
|---|---|
| 0 | geogr. Mitte d. Arab.Emirate |

Bezüglich des Zielteilnehmers eines Verbindungswunsches sei ein Ziffernstring gegeben, welcher dessen E.164 Rufnummer enthält. Diesen Zifferstring muß man zunächst in die drei Bestandteile Länderkennziffer, Ortsvorwahlnummer bzw. Area-Code, Teilnehmernummer zerlegen.

Mitunter hat der Anrufer nur die Teilnehmernummer gewählt oder lediglich Ortsvorwahl + Teilnehmer-nummer. In diesen Fällen müßte man die fehlenden Bestandteile künstlich hinzufügen, und zwar mit jenen, welche für den Abrufer selbst zutreffen.

Mitunter sind den Länderkennziffern sog. Access-Ziffern vorangestellt (z.B. die Doppelnull), welche von Land zu Land unterschiedlich sind und die man entsprechend individuell als erstes entfernen müßte.

Das Zerlegen in die drei genannten Bestandteile geschieht entweder per Programmabfragen, oder per Tabellenauswertungen oder durch irgendeine Kombination aus beidem.

Z.B. falls Länderkennziffer 1 ( = Nordamerika ohne Mexiko) so ist der nachfolgende Area-code stets dreiziffrig. Falls die Länderkennziffer = 49 ( Deutschland ), so ist die nachfolgende Ortsvorwahlnummer (OVON) zwei- bis fünfziffrig.

Ganz allgemein läßt sich die Aufgabe wie folgt lösen: Man bestimme die jeweilige Teilstringlänge mittels Tabellen, die ähnlich sind zu jenen der HICOM-PBX für Wahlkontrolle.Man beginnt mit einem ersten Wahlbewertungsblock, den man mit der ersten Ziffer indiziert und aus dem man entweder ein Ende-Zeichen ausliest oder aber den Index auf einen weiteren Wahlbewertungsblock, welchen man mit der zweiten Ziffer indiziert, usw. bis man irgendeinmal doch auf ein Ende-Zeichen trifft. Die Anzahl der hierbei betrachteten Wahlbewertungsblöcke ist gleich der zu ermittelnden Teilstringlänge.

Nachfolgend wird angenommen, Länderkennziffer und OVON bzw. Areacode liegen bereits isoliert vor.

Der Switch durchsucht zunächst einen Cache-Speicher (per Hash-Suchverfahren), ob nicht schon früher einmal ein call mit dieser Länderkennziffer und dieser OVON/Areacode zu tätigen war und deshalb ein Eintrag gefunden wird, welcher den am Ziel nächstgelegenen Privatnetzknoten ausweist.

Angenommen, diese Suche ist erfolglos. Nun wird die Liste L2/L3 durchsucht um die geographischen Koordinaten bestmöglichst zu bestimmen. Falls der gewünschte AREA-code nicht angetroffen wird, so erhält man zumindest die "Mittelpunkt"-Koordinaten des angewählten Landes.

Die so ermittelten Koordinaten sind $(x_z, y_z)$ des Zielpunktes Z.

Um aus einer Menge von Netzknoten $P_i$ $(x_i, y_i)$ jenen auszusuchen, dessen Distanz zum angewählten Ziel Z $(x_z, y_z)$ am nächstgelegensten ist, nämlich $P_{i*}$, kann es genügen, eine Approximationsformel statt einer exakten Formel zu benützen.

Erfindungsgemäß wird zwischen dem Startknoten $P_s$ $(x_s, y_s)$ und dem Knoten $P_{i*}$ entschieden, an welchem der beiden Knoten der Übertritt in das öffentliche Vermittlungsnetz geschehen solle.

Die Entscheidung hängt von der Gebührenpolitik des öffentlichen Netzbetreibers ab.

Für den Fall Deutschland bedeutet dies:

Die deutsche TELEKOM führt 4 Entfernungszonen: City, Region 50 km, Region 200km, Fern.

Erfindungsgemäß wird hier nur dann nach $P_{i*}$ geroutet um dort das Privatnetz zu verlassen, wenn dadurch Entfernungszonen eingespart werden können.

Erfindungsgemäß berechnet man die Distanzen $D(P_s, Z)$ und $D(P_{i*}, Z)$ mit Hilfe der obigen exakten Berechnungsformeln.

Falls $D(P_{i*}, Z)$ in eine günstigere Entfernungszone fällt als die Distanz $D(P_s, Z)$

so wird über $P_{i*}$ geroutet.

Spezialfall City-Zone: Erfindungsgemäß führe man in einer weiteren Tabelle pro Privatnetzknoten $P_i$

die diesbezüglich zuständige Ortsvorwahlnummer. Falls die gewählte Ortsvorwahlnummer (= die des Zielteilnehmers) identisch ist zu jener, welche dem Startknoten $P_s$ zugeordnet ist, so wechselt man bereits beim Startknoten über in das öffentliche Netz, wobei man die Ortsvorwahl unterdrückt, d.h. nicht in das öffentliche Netz leitet. Bei Nicht-Identität überprüft man, ob die gewählte Ortsvorwahlnummer mit jener welche dem Knoten $P_{i*}$ zugeordnet ist übereinstimmt. Falls dies zutrifft so wechselt man beim Knoten $P_{i*}$

in das öffentliche Netz wobei man die gewählte Ortsvorwahl gleichfalls unterdrückt.

Der Fall Deutschland ist eher typisch d.h. auch in anderen Ländern der Welt werden Gebührentarife nach Entfernungszonen gestaffelt, wodurch das erfindungsgemäße Verfahren auch in diesen Ländern einen gebührensparenden Effekt erzielt.

## Patentansprüche

1. Verfahren zum Bestimmen eines Netzübergangsknotens für eine über einen Zielnetzknoten zu einem Zielendgerät in einem Zielkommunikationsnetz aufzubauenden Verbindung innerhalb eines Kommunikationsnetzverbundes, wobei die Verbindung von einem ersten Kommunikationsnetz mindestens in ein zweites Kommunikationsnetz übergeht, **gekennzeichnet** durch das Auswerten der E164-Adresse des Zielendgerätes zum Ermitteln der Adresse des Zielnetzknotens und der Adressen von diesem Zielnetzknoten hierarchisch übergeordneten Netzknoten innerhalb des Zielkommunikationsnetzes;

   durch annäherndes Ermitteln des Ortes des Zielendgerätes durch Ermitteln des Ortes eines dem Zielendgerät nahegelegenen Knotens durch Vergleichen der ermittelten Adressen mit gespeicherten Adressen, denen geografische Koordinaten zugeordnet sind;

   durch Ermitteln eines Netzknotens des ersten Kommunikationsnetzes, der dem Netzknoten des Zielkommunikationsnetzes als Netzübergang zugeordnet ist, dessen geografische Koordinaten ermittelt werden konnten und der dem Zielendgerät am nächsten gelegen ist.

2. Verfahren nach Anspruch 1, dadurch **gekennzeichnet**, daß zum Ermitteln des dem Netzknoten des Zielkommunikationsnetzes zugeordneten Netzknotens des ersten Kommunikationsnetzes zuerst in einer Tabelle verglichen wird, ob der Ort des Zielendgerätes innerhalb eines Bereiches liegt, dem ein spezieller Netzknoten des ersten Kommunikationsnetzes als Netzübergang zugeordnet ist, und, falls nicht, daß der Abstand zwischen dem dem Ort des Zielendgeräts als am nächsten gelegen ermittelten Ortes und Netzknoten des ersten Kommunikationsnetzes jeweils ermittelt wird, und der Netzknoten des ersten Kommunikationsnetzes mit dem geringsten Abstand zum Ort des Zielendgerätes als Netzübergang ausgewählt wird.

3. Verfahren nach Anspruch 2, dadurch **gekennzeichnet**, daß zum Ermitteln des Abstandes des Ortes des Zielendgerätes zu Netzknoten des ersten Kommunikationsnetzes jeweils die geografischen Koordinaten der Netzknoten des ersten Kommunikationsnetzes aus einer Tabelle entnommen werden und die Abstände jeweils auf der Grundlage der geografischen Koordinaten der einzelnen Netzknoten des ersten Kommunikationsnetzes und der dem Zielendgerät als am nächsten gelegen ermittelten geografischen Koordinaten berechnet wird.

4. Verfahren nach Anspruch 2, dadurch **gekennzeichnet**, daß die geografische Breite und die geografische Länge

6

des dem Ort des Zielendgeräts als am nächsten gelegen ermittelten Ortes jeweils mit der geografischen Breite bzw. der geografischen Länge jedes Netzknotens des ersten Kommunikationsnetzes verglichen werden und daß der Abstand zwischen dem ermittelten Ort des Zielendgerätes und einer Gruppe von Netzknoten des ersten Kommunikationsnetzes berechnet wird, deren Abstand bezüglich der geografischen Länge oder bezüglich der geografischen Breite als relativ gering festgestellt worden ist, um dadurch den Netzknoten des ersten Kommunikationsnetzes mit dem kürzesten Abstand zum Zielendgerät zu ermitteln und als Netzübergang festzulegen.

5. Verfahren nach einem der vorhergehenden Ansprüche, wobei das Zielkommunikationsnetz zumindest teilweise mit dem ersten Kommunikationsnetz überlappt und ein Netzübergang vom ersten Kommunikationsnetz zum Zielkommunikationsnetz zu ermitteln ist, wobei im ersten Kommunikationsnetz eine Tabelle der Netzknoten des Zielkommunikationsnetzes und deren geografische Koordinaten vorliegt, wobei der Abstand zwischen dem Zielnetzknoten und allen Netzknoten des ersten Kommunikationsnetzes auf der Grundlage der geografischen Koordinaten jeweils berechnet wird und wobei der Netzknoten des ersten Kommunikationsnetzes als Netzübergang ausgewählt wird, der innerhalb des Zielkommunikationsnetzes in der günstigsten Gebührenentfernungszone liegt und der von den in der günstigsten Gebührenentfernungszone liegenden Netzknoten den kürzesten Abstand innerhalb des ersten Kommunikationsnetzes zu einem Ursprungsknoten hat, von dem aus die Verbindung aufgebaut wird.